# EUROPÄISCHE PATENTSCHRIFT

(11) **EP 3 622 937 B1**
(45) Veröffentlichungstag und Bekanntmachung des Hinweises auf die Patenterteilung: **22.09.2021**
(21) Anmeldenummer: 19204927.8
(22) Anmeldetag: 31.10.2018
(51) Int. Cl.: A61H 3/04

(54) **ROLLATOR MIT ELEKTRISCHEM ANTRIEB**
ROLLATOR WITH AN ELECTRICAL DRIVE
DÉAMBULATEUR À ENTRAINEMENT ÉLECTRIQUE

(30) Priorität: 22.11.2017 DE 102017127568
(43) Veröffentlichungstag der Anmeldung: 18.03.2020
(62) Teilanmeldung aus: 18203746.5
(73) Patentinhaber: Disco Drives Kirschey GmbH, 42329 Wuppertal (DE)
(72) Erfinder: Kirschey, Gerhard, 42329 Wuppertal (DE)
(74) Vertreter: Ostriga Sonnet Wirths & Vorwerk

(56) Entgegenhaltungen:
- WO-A1-99/16653
- WO-A1-2016/170364
- CN-U- 205 866 979
- DE-B4-102007 062 406
- DE-U1-202009 009 547
- DE-U1-202011 104 720
- DE-U1-202013 007 716
- US-B1- 8 006 786
- US-B1- 9 744 095

## Beschreibung

Die Erfindung betrifft einen Rollator,
- mit in einem in Fahrtrichtung vorne liegenden Radpaar und einem in Fahrtrichtung hinten liegenden Radpaar,
- mit einem Rahmen, der nach hinten gerichtete Streben aufweist, wobei jede Strebe ein hinteres Rad des hinteren Radpaares hält,
- mit einem elektromotorischen Antrieb, mittels dessen der Rollator zumindest in Fahrtrichtung vorwärts bewegbar ist,
- mit einem Scherenmechanismus zum Zusammenlegen des Rollators, der zwei sich kreuzende Scherenhebel (55) mit einer die Scherenhebel (55) verbindenden Scherenachse (61) aufweist, und mittels dessen der Rollator (10) entlang einer parallel zur Bewegungsrichtung des Rollators (10) liegenden Achse zusammenlegbar ist.

Rollatoren als Gehhilfen für Menschen mit eingeschränkter Mobilität sind aus dem Stand der Technik allgemein bekannt. Sie ermöglichen es, den jeweiligen Nutzern eine Fülle von Unternehmungen des täglichen Alltages zu erledigen. Dabei helfen Sie nicht nur, Stürze von Personen mit eingeschränkter Mobilität zu vermeiden, sondern erlauben es solchen Menschen darüber hinaus, Lasten, wie Einkäufe des täglichen Bedarfs sicher zu transportieren. Insbesondere Menschen, denen der klassische Gehstock als Hilfe nicht ausreicht, für die jedoch eine Rollstuhlnutzung eine zu starke Mobilitätseinschränkung bedeuten würde, verhelfen Rollatoren zu einem größeren Bewegungsraum als es ohne solche Hilfsgeräte möglich wäre.

Je nach Mobilitätseinschränkung oder Einsatzbereich kann es für betroffene Menschen sehr kraftanstrengend sein, Wege mit dem Rollator zurückzulegen. Für solche Fälle sind im Stand der Technik verschiedene Möglichkeiten für einen elektromotorischen Antrieb vorgeschlagen worden. So offenbart EP 2 451 423 B1 einen Rollator mit einer nachlaufenden Plattform. Diese verfügt über einen elektromotorischen Antrieb. Der Benutzer kann sich auf diese Plattform stellen und den Antrieb in Gang setzen. Der Rollator nebst Benutzer wird dann elektromotorisch vorwärtsbewegt. Die in der EP 2 451 423 B1 offenbarte Plattform ist elektromotorisch anhebbar in eine Lagerstellung.

Die DE 10 2007 062 406 B4 offenbart ebenfalls einen Rollator mit elektrischem Antrieb. Auch hier wird eine Transportplattform nachgeführt, wobei am Rollator ein separates Antriebsrad für den Vortrieb angeordnet ist.

Die DE 20 2013 007 716 U1 zeigt im Ausführungsbeispiel zwar eine Nachlaufeinrichtung für Kinderwagen, die jedoch gemäß Beschreibungstext geeignet ist, für einen Rollator genutzt zu werden. Die dort beschriebene Ausführungsform zeichnet sich insbesondere dadurch aus, dass ein lenkbares Leitrad im zentralen Lenkmittelpunkt des aus Rollator und angehängter Transportplattform bestehenden Gespanns angeordnet ist.

Auch DE 20 2016 002 904 U1 zeigt einen Rollator mit elektrischem Antrieb. Hierbei handelt es sich wiederum um einen Nachläufer, der an einer Achse zwischen den Hinterrädern des Rollators angehängt ist. Schließlich ist noch auf die DE 103 55 161 A1 und

DE 10 2005 014 613 A1 zu verweisen, welche elektromotorisch angetriebene Nachlaufeinrichtungen für Kinderwagen bzw. Einkaufswagen offenbaren.

CN 205 866 979 U zeigt einen Rollator gattungsgemäßer Art, der sich entlang einer parallel zur Bewegungsrichtung des Rollators liegenden Ebene zusammenlegen lässt und hierzu ein Scherengelenk aufweist.

DE202011104720U zeigt einen Rollator gemäß Oberbegriff des Anspruchs 1.

All den Vorrichtungen aus dem druckschriftlich bekannten Stand der Technik ist gemein, dass der am Rollator, Kinderwagen oder Einkaufswagen angehängte Nachläufer eine Stehfläche für eine Person aufweist, sodass die Person und das voreilende Hilfsmittel (Kinderwagen, Einkaufswagen, Rollator) über den elektromotorischen Antrieb fortbewegt werden.

Solche Einrichtungen sind besonders vorteilhaft für mobilitätseingeschränkte Menschen, die beispielsweise Steigungen bewältigen müssen oder ohne einen elektromotorischen Hilfsantrieb aus einer Erschöpfung heraus einen angestrebten Zielort nicht ohne Pause erreichen können.

Die vorgestellten Lösungen sind in der Regel als Nachrüstlösung ausgeführt. Teilweise können die Nachläufer bei Nichtgebrauch in eine Lagerstellung bewegt oder vom Rollator entfernt werden.

Aufgabe der Erfindung ist es, einen elektromotorisch angetriebenen Rollator bereit zu stellen, welcher für den Benutzer sicher in der Handhabung ist.

Gelöst wird diese Aufgabe zunächst von einem Rollator mit den Merkmalen des Anspruchs 1, insbesondere mit dessen kennzeichnenden Merkmalen, wonach eine Plattform am Rollator befestigt ist, die wenigstens ein Rad aufweist und eine Stehfläche für eine den Rollator nutzende Person zur Verfügung stellt, eine Koppeleinrichtung vorgesehen ist, mittels derer die Plattform zug- und schublasthaltend am Rollator angeordnet ist, die Koppeleinrichtung im Kreuzungsbereich der dem Rollator zugeordneten Scherenhebel angeordnet ist und die Koppeleinrichtung eine Befestigungsspange umfasst, welche den Kreuzungsbereich der Scherenhebel umfängt und deren Stützstreben auf den Scherenhebeln aufliegen.

Bevorzugt ist eine Ausführungsform, bei welcher die Plattform mit ihrer Stehfläche zwischen den Rädern des hinteren Radpaares angeordnet ist.

Der wesentliche Vorteil der Erfindung liegt zunächst darin, erkannt zu haben, dass die Anordnung der nachlaufenden, dem Transport der benutzenden Person dienenden Plattform im Stand der Technik ergonomisch ungünstig ist. Im vorzitierten Stand der Technik befindet sich die nachlaufende Plattform bei Rollatoren hinter der bei Fortbewegung ohne Antrieb eingenommenen Position des benutzenden Menschen.

Da die Plattform nunmehr in etwa dort angeordnet ist, wo sich eine nutzende Person befindet, wenn der Rollator ohne elektrischen Antrieb betrieben wird, kann diese durch die erfindungsgemäße Plattformanordnung eine ergonomisch günstige, aufrechte Körperhaltung einnehmen. Gleichzeitig ist das aus Rollator und Plattform bestehende Gespann bei erfindungsgemäßer Plattformanordnung wesentlich kippstabiler als die im Stand der Technik gezeigten Hilfsmittel, insbesondere, wenn die von der Plattform zur Verfügung gestellte Stehfläche vollständig oder zumindest etwa zur Hälfte vor einer durch die Drehachsen der Hinterräder gelegten, geometrischen Achse angeordnet ist.

Es ist vorgesehen, dass die Plattform eine sich nach hinten verjüngende Stehfläche aufweist.

Dabei ist insbesondere vorgesehen, dass die Plattform an ihrem hinten liegenden Ende mit zumindest einem Rad versehen ist, welches insbesondere als Antriebsrad mit integriertem Elektromotor ausgebildet ist.

Eine sich nach hinten verjüngende Plattform, insbesondere mit sich nach hinten verjüngender Stehfläche und mit einem einzigen, am hinteren Ende der Plattform mittig angeordneten Rad, insbesondere Antriebsrad, bietet zunächst durch das hinten liegende Antriebsrad eine gute Abstützung der Plattform Das hinten liegende Antriebsrad wird durch die physikalisch wirkenden Kräfte mit einem hohen Bodendruck versehen, so dass die Gefahr eines Radschlupfes minimiert ist. Die sich nach hinten verjüngende Stehfläche entspricht zudem der in etwa trapezförmigen Aufstandsfläche der Füße einer stehenden Person. Dies macht sich die Erfindung zunutze, indem sie die Plattform an diese Stehfläche anpasst und nach hinten hin verjüngend zulaufen lässt. Hierdurch wird insbesondere bei Kurvenfahrten des Gespanns mehr nutzbarer Raum zwischen den hinteren Rädern des Rollators zur Verfügung gestellt, was engere Kurvenradien ermöglicht.

Es ist vorgesehen, dass die Plattform einen Akkumulator zur Stromversorgung des Elektromotors trägt, wobei dieser insbesondere an der Unterseite der Plattform oder in einem Aufnahmeschacht auf der Oberseite der Plattform angeordnet ist.

In einer ausgesprochen bevorzugten Weiterbildung ist vorgesehen, dass neben dem Akkumulator alle weiteren wesentlichen Bestandteile des elektromotorischen Antriebs, beispielsweise die Antriebssteuerung, eine eventuelle Laderegelelektronik für den Akkumulator an der Plattform angeordnet sind. Für den Schwerpunkt der Plattform und des Gespanns insgesamt ist es vorteilhaft, wenn der Akku unterhalb der Plattform angeordnet ist. Es ist denkbar, dort ein Fach oder eine Schublade vorzusehen, so dass der Akku zu Ladezwecken entnommen werden kann. Denkbar ist jedoch auch, den Akkumulator dort fest zu verbauen und mit einem Steckanschluss zum Laden zu versehen. In einem solchen Falle wäre die Plattform in die Nähe eines Stromanschlusses zu bewegen, um den Akkumulator zu laden. Ein unterhalb der Plattform angeordneter Akku hat den Vorteil, dass die auf der Oberseite der Plattform gebildete Stehfläche maximiert ist.

Um die Entnahme bzw. den Austausch eines Akkumulators zu erleichtern, ist es jedoch denkbar, zur Aufnahme des Akkumulators einen auf der Plattform angeordneten Schacht oder eine Halterung vorzusehen. Dieser kann darüber hinaus Platz für diverse Steuer- und Elektronikkomponenten aufweisen. Dieser Schacht bzw. die Halterung ist idealerweise entlang der in Fahrtrichtung angeordneten Längsachse der Plattform orientiert und teilt die Plattform in zwei Stehflächenhälften, so dass bei Nutzung der Plattform der Schacht zwischen den Füssen des Benutzers angeordnet ist.

Wenn alle wesentlichen, für den elektromotorischen Betrieb notwendigen Komponenten Teil der Plattform sind, sind diese mit Entfernen der Plattform vom Rollator abgenommen, so dass mit einem Handgriff vom motorisch betriebenen Rollator zum nicht motorischen Betrieb gewechselt werden kann.

Eine Bedienungshandhabe zur Einstellung der Vortriebsgeschwindigkeit des Rollators, beispielsweise ein als Drehgriff ausgestalteter Handgriff, kann per Funkverbindung mit der auf der Plattform angeordneten Steuerung verbunden sein. Sollte eine Kabelverbindung von der Bedienungshandhabe zur Steuerung geführt sein, ist diese Kabelverbindung im Bereich einer Koppeleinrichtung zwischen Plattform und Rollator trennbar, insbesondere durch eine auflösbare Steckverbindung. Eine Funkverbindung nach Bluetooth-Standard ist bevorzugt.

Es ist vorgesehen, dass der Rollator mit einer Koppeleinrichtung versehen ist, mittels derer die Plattform zug- und schublasthaltend am Rollator angeordnet ist.

Dabei ist vorgesehen, dass die Koppeleinrichtung ein einfaches Verbinden und Lösen der Plattform am Rollator ermöglicht. Infolgedessen kann der Rollator recht einfach von motorisierten auf unmotorisierten Betrieb umgestellt werden.

Die Erfindung sieht vor, dass die Koppeleinrichtung mit einem Gelenk versehen ist, welches eine durch Nickbewegungen hervorgerufene Relativverlagerung von Rollator und Plattform ermöglicht und eine Drehachse zwischen Rollator und Plattform definiert, um welche das Gespann aus Rollator und Plattform bei einer Kurvenfahrt knickt.

Hierbei ist vorgesehen, dass die Koppeleinrichtung über zumindest zwei Drehachsen verfügt. Eine erste Achse verläuft quer zur Bewegungsrichtung. Eine zweite Achse verläuft im Wesentlichen vertikal zur Plattformoberfläche. Dabei gleicht die quer zur Bewegungsrichtung ausgerichtete Achse Nickbewegungen aus. Die vertikal gerichtete Achse dient als Drehachse, um welche herum das Gespann bei Kurvenfahrt knickt. Um die Rollatorlängsachse findet keine Relativverlagerung zwischen Rollator und Plattform statt. Hinsichtlich dieser Achse ist die Verbindung drehfest.

Vorgesehen ist ferner, dass die Koppeleinrichtung mit einer Horizontalachse versehen ist, mittels derer die Plattform von einer der Nutzung dienenden Funktionsstellung in eine Lagerstellung bewegbar ist.

Hierbei ist insbesondere vorgesehen, dass die zum Verlagern der Plattform zwischen Funktionsstellung und Lagerstellung genutzte Horizontalachse mit der die Nickbewegungen ausgleichenden Achse zusammenfällt.

Vorgesehen ist ferner, dass die Plattform in ihrer Funktionsstellung unterhalb der Koppeleinrichtung angeordnet ist und mittels einer Vertikalstrebe in der Koppeleinrichtung gehalten ist.

Dabei ist insbesondere von Vorteil, wenn die Koppeleinrichtung eine Schubaufnahme aufweist, die die Vertikalstrebe aufnimmt und innerhalb derer die Vertikalstrebe verschieblich gehalten ist.

Die Schubaufnahme erlaubt es, die Plattform in ihrer Lagerstellung in Richtung der Vorderräder des Rollators zu verschieben und somit den Raum zwischen den Hinterrädern als Bewegungsraum für den Benutzer freizuhalten.

Vorgesehen ist weiterhin, dass die Koppeleinrichtung eine Hubhilfe aufweist, mittels derer eine Bewegung der Plattform von ihrer Funktionsstellung in ihre Lagerstellung unterstützt wird, wobei insbesondere eine mechanische Hubhilfe, wie beispielsweise eine Hubfeder vorgesehen ist.

Alternativ kann die Hubhilfe auch elektromotorisch ausgestaltet sein.

Vorgesehen ist weiterhin, dass das Rad mit einer um die Radachse drehbaren Schutzeinrichtung versehen ist, welche in der Lagerstellung der Plattform zum Nutzer des Rollators weist und die zum Nutzer weisende Lauffläche des Rades abdeckt.

Die hier vorgesehene Schutzeinrichtung, im Grunde ein das Rad überfangendes Schutzblech, hat hier einen Doppelnutzen. Zum einen schützt es den Benutzer davor, mit dem Antriebsrad bei Nutzung des elektromotorischen Antriebs in Berührung zu kommen und hilft so Unfälle zu vermeiden.

Wenn hingegen die Plattform in ihrer Lagerstellung befindlich, also hochgeklappt ist, lässt sich das Schutzblech hingegen um die Radachse drehen, so dass es zum Rollator-Benutzer weist. Es deckt so die zum Benutzer weisende Lauffläche des Antriebsrades ab und schützt so vor möglicherweise am Antriebsrad anhaftenden Schmutzpartikeln.

Ferner ist vorgesehen, dass die Plattform auch bei einer Kurvenfahrt innerhalb einer Fläche nachläuft, die seitlich von den Radialebenen der hinteren Räder begrenzt ist.

Der Vorteil dieser erfindungsgemäßen Ausführungsform liegt darin, dass eine sehr hohe Kippstabilität des aus Rollator und Plattform bestehenden Gespanns erzielt wird.

Eine weitere Verbesserung der Stabilität wird erreicht, wenn die Aufstandsfläche des Benutzers auf der Plattform im Wesentlichen innerhalb eines von den Hinterrädern des Rollators und dem Rad der Plattform gebildeten Dreiecks angeordnet ist.

Es ist vorgesehen, dass die Plattform von der Koppeleinrichtung trennbar ist.

Weitere Vorteile ergeben sich aus der nachfolgenden Beschreibung verschiedener Ausführungsbeispiele. Es zeigen:
Fig. 1: einen Rollator erster Bauart aus dem Stand der Technik,
Fig. 2: einen Horizontalschnitt durch den Rollator gemäß Fig. 1,
Fig. 3: einen erfindungsgemäßen Rollator mit Plattform,
Fig. 4 und Fig. 5: Detailansichten der Plattformbefestigung am Rollator gemäß Fig. 3.

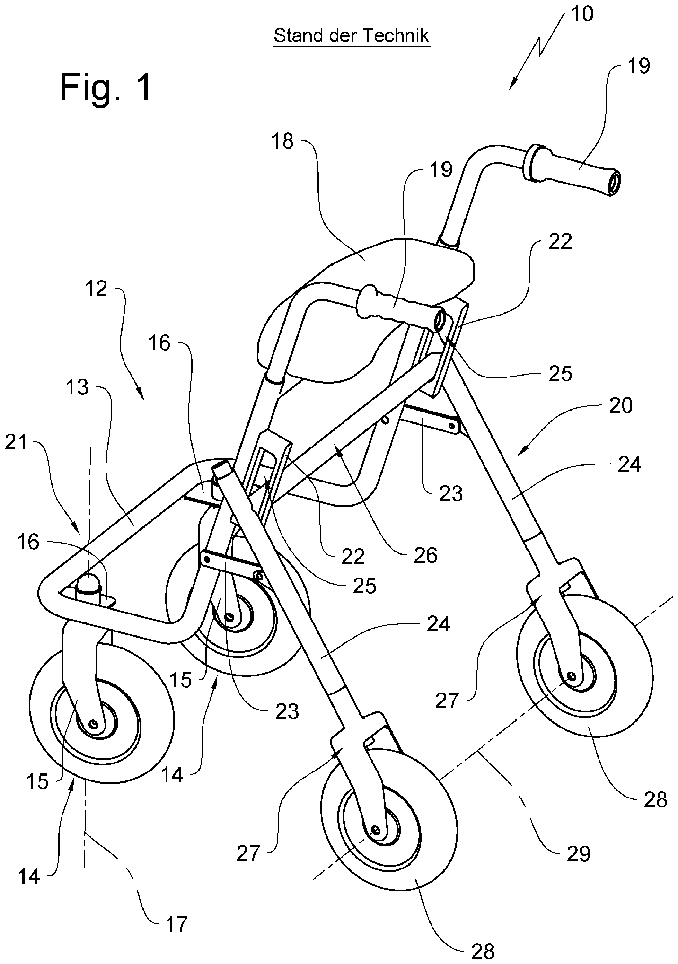

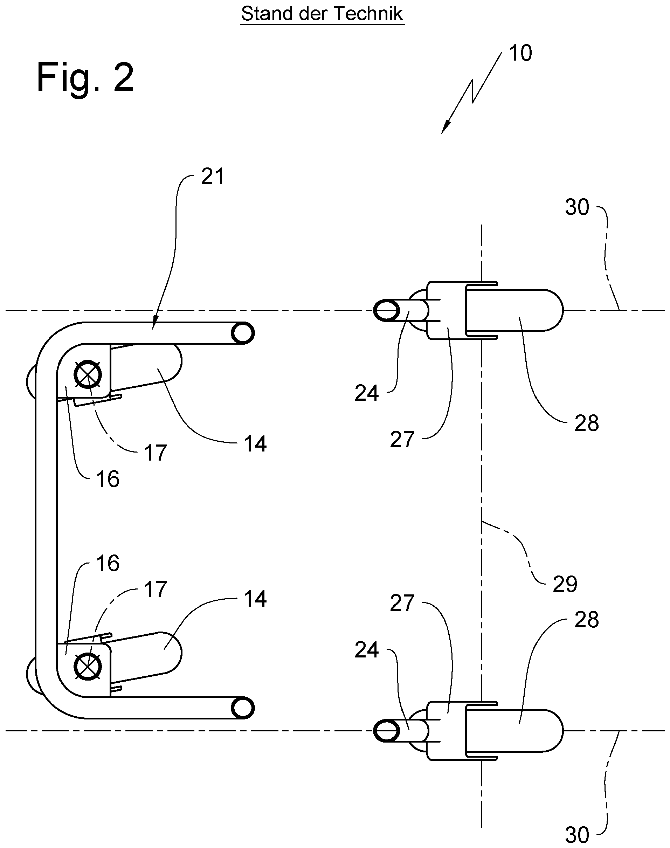

In den Figuren ist ein Rollator insgesamt mit der Bezugsziffer 10 versehen. In den Figuren 1 und 2 ist zur Einführung in die Erfindung zunächst ein Rollator 10 aus dem Stand der Technik gezeigt, welcher in den weiteren Figuren in verschiedenen Ausführungsformen und ergänzt um eine nachlaufende Plattform 11 einen erfindungsgemäßen Rollator 10 bildet. Insofern gilt, soweit nichts Anderes gesagt, die generelle Beschreibung des Rollators des Standes der Technik auch für die erfindungsgemäßen Rollatoren, weshalb für identische oder analog wirkende Bauteile gleiche Bezugszeichen verwendet werden.

Fig. 1 zeigt den Rollator 10 aus dem Stand der Technik in perspektivische Ansicht. Der Rollator 10 verfügt zunächst über einen insgesamt mit der Bezugsziffer 12 versehenen Rahmen aus einem rohrartigen Gestänge 13, welches der Befestigung verschiedener Bauteile dient. Der Rahmen 12 ist zweigeteilt und bildet einen vorderen Rahmenabschnitt 21 und einen hinteren Rahmenabschnitt 20. Der Rahmen 12 mit seinem vorderen Rahmenabschnitt 21 trägt zunächst zwei nebeneinander angeordnete Vorderräder 14, die von je einer vorderen Radgabel 15 gehalten sind. Dabei sind die vorderen Radgabeln 15 in einer Radgabelhalterung 16 um eine vertikale Drehachse 17 schwenkbar am Rahmen 12 angeordnet.

Der Rahmen 12 trägt sodann ein Sitz- oder Stützbrett 18 sowie zwei Haltegriffe 19, welche teleskopierbar im Rohrgestänge des Rahmens 12 gehalten sind, um eine stufenlose Höhenverstellung und somit eine Anpassung an die Größe des Benutzers zu ermöglichen. Bei einem erfindungsgemäßen Rollator 10 ist zumindest einer der Haltegriffe 19 als Drehgriff ausgestaltet, wobei eine Drehung des Griffes der Elektrizitätseinspeisung an einem Motor dient. Mit einem steigenden Drehwinkel des Haltegriffs 19 wird die Motordrehzahl erhöht. Der Drehgriff verlagert sich automatisch in eine Nullstellung, wenn er von der Bedienperson losgelassen wird. In dieser Nullstellung wird der Vortrieb durch den Motor gestoppt.

Der hintere Rahmenabschnitt 20 ist am vorderen Rahmenabschnitt 21 über langlochversehene Halteteile 22 und zwei Kniehebel 23 festgelegt.

Der hintere Rahmenabschnitt 20 besteht im Wesentlichen aus zwei parallel zueinander gerichteten Streben 24, welche über eine in den Halteteilen 22 bzw. deren Langlöchern 25 gelagerte, horizontale Verbindungsstange 26 miteinander gekoppelt sind. Jeder Kniehebel 23 verbindet je eine Strebe 24 mit dem vorderen Rahmenabschnitt 21.

Jede Strebe trägt eine hintere Radgabel 27, wobei in jeder Radgabel 27 ein Hinterrad 28 gehalten ist. Durch die Drehachsen der Hinterräder 28 ist eine geometrische, die Räder verbindende, körperlich nicht vorhandene Hinterachse 29 zu legen. Dabei sind die Hinterräder 28 starr, das heißt nicht schwenkbar in den hinteren Radgabeln 27 festgelegt.

Der in Fig. 1 dargestellte Rollator kann zusammengelegt werden, indem die horizontale Verbindungsstange im Langloch nach oben verlagert wird, wobei die Kniehebelgelenke 23 zusammengelegt werden.

Fig. 2 zeigt den Rollator gemäß Fig. 1 in einem Vertikalschnitt. Die Schnittebene liegt leicht oberhalb der hinteren Radgabeln 27. Zu entnehmen ist dieser Zeichnung insbesondere die schwenkbare Lagerung der Vorderräder 14 in den Radgabelhalterungen 16. Dargestellt ist darüber hinaus die geometrische Hinterachse 29, welche in der folgenden Zeichnungsbeschreibung eine Rolle spielen wird, sowie die von jedem Hinterrad 28 aufgespannte Radialebene 30.

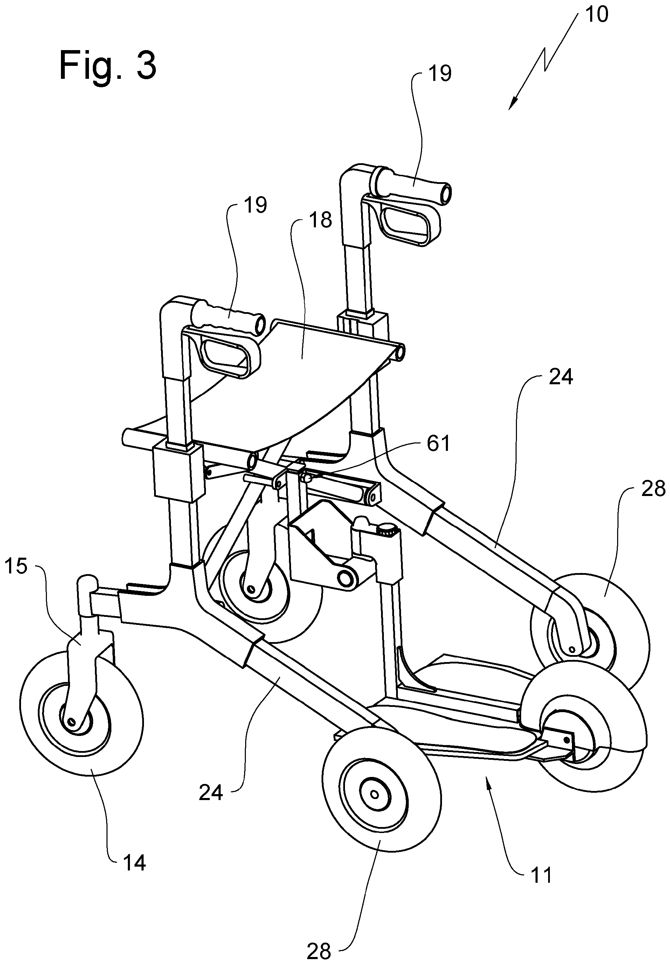

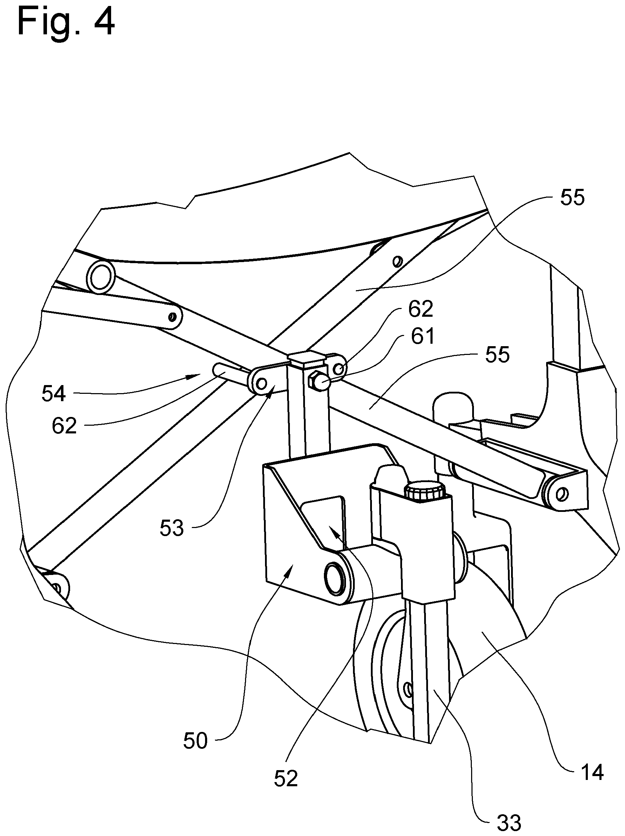

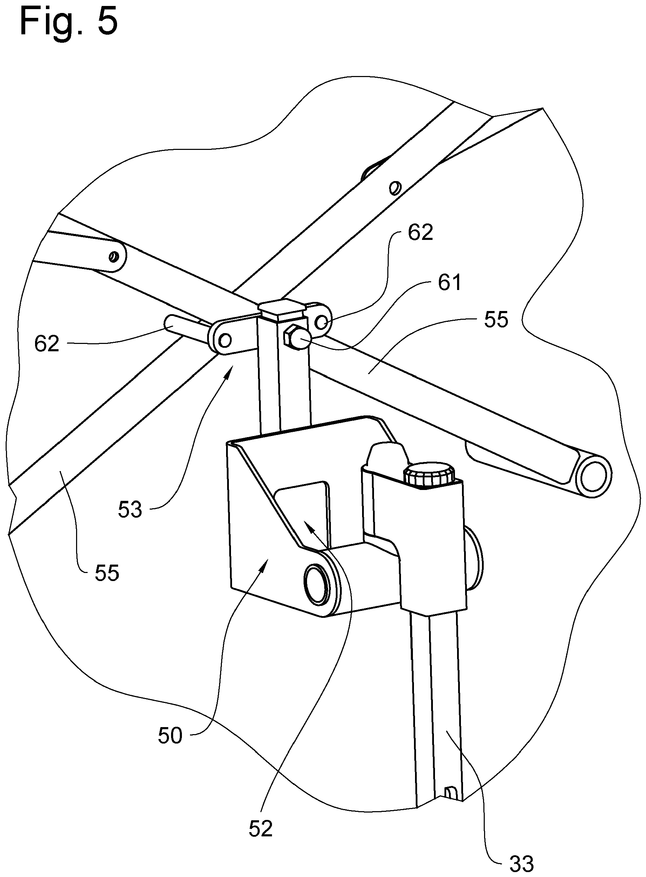

In den Figuren 3 bis 5 ist nunmehr ein Rollator 10 alternativer Bauart in Gesamtansicht sowie in zwei Detailansichten gezeigt, der ebenfalls erfindungsgemäß mit einer nachlaufenden Plattform 11 ausgerüstet ist. Im Unterschied zum eingangs beschriebenen Rollator 10 lässt sich der hier dargestellte Rollator 10 über einen Scherenmechanismus zusammenlegen. Um die Plattform 11 hier festzulegen, wurde der vorbeschriebene Koppelkorb 50 an der die Scherenhebel 55 verbindenden Scherenachse 61 festgelegt, welche von einem Schraubenbolzen gebildet ist. Mittels einer Befestigungsspange 53, welche den Kreuzbereich der Scherenhebel 55 umfängt und deren Stützstreben 62 auf den Scherenhebeln 55 aufliegen, wird ein seitliches Verkippen der Plattform 11 verhindert. So ist eine Dreh- oder Schwenkbewegung um die Scherenachse 61 sicher vermieden.

**Bezugszeichenliste**

| | | | |
|---|---|---|---|
| 10 | Rollator | 50 | Koppelkorb |
| 11 | nachlaufende Plattform | 52 | Schubausnehmung |
| 12 | Rahmen | 53 | Befestigungsspange |
| 13 | rohrartiges Gestänge | 54 | Kreuzungsbereich von 55 |
| 14 | Vorderrad | 55 | Scherenhebel |
| 15 | vordere Radgabel | 61 | Scherenachse |
| 16 | Radgabelhalterung | 62 | Stützstrebe |
| 17 | vertikale Drehachse von 16 | | |
| 18 | Sitz-/Stützbrett | | |
| 19 | Haltegriffe | | |
| 20 | hinterer Rahmenabschnitt | | |
| 21 | vorderer Rahmenabschnitt | | |
| 22 | Halteteil von 21 | | |
| 23 | Kniehebel | | |
| 24 | Strebe | | |
| 25 | Langloch von 22 | | |
| 28 | Hinterrad | | |
| 33 | Vertikalstrebe | | |

## Patentansprüche

1. Rollator (10),
- mit in einem in Fahrtrichtung vorne liegenden Radpaar und einem in Fahrtrichtung hinten liegenden Radpaar,
- mit einem Rahmen (12), der nach hinten gerichtete Streben aufweist, wobei jede Strebe ein hinteres Rad des hinteren Radpaares hält,
- mit einem elektromotorischen Antrieb, mittels dessen der Rollator (10) zumindest in Fahrtrichtung vorwärts bewegbar ist,
- mit einem Scherenmechanismus zum Zusammenlegen des Rollators, der zwei sich kreuzende Scherenhebel (55) mit einer die Scherenhebel (55) verbindenden Scherenachse (61) aufweist, und mittels dessen der Rollator (10) entlang einer parallel zur Bewegungsrichtung des Rollators (10) liegenden Achse zusammenlegbar ist,
**dadurch gekennzeichnet, dass**
- eine Plattform (11) am Rollator (10) befestigt ist, die wenigstens ein Rad aufweist und eine Stehfläche (47) für eine den Rollator (10) nutzende Person zur Verfügung stellt,
- eine Koppeleinrichtung (32) vorgesehen ist, mittels derer die Plattform (11) zug- und schublasthaltend am Rollator (10) angeordnet ist,
- die Koppeleinrichtung (32) im Kreuzungsbereich (54) der dem Rollator (10) zugeordneten Scherenhebel (55) angeordnet ist
- die Koppeleinrichtung eine Befestigungsspange (53) umfasst, welche den Kreuzungsbereich der Scherenhebel (55) umfängt und deren Stützstreben (62) auf den Scherenhebeln (55) aufliegen.

2. Rollator nach Anspruch 1, **dadurch gekennzeichnet, dass** die Koppeleinrichtung an der die Scherenhebel (55) verbindenden Scherenachse festgelegt ist.

3. Rollator nach Anspruch 2, **dadurch gekennzeichnet, dass** die Scherenachse von einem Schraubbolzen gebildet ist.

4. Rollator (10) nach Anspruch 1, **dadurch gekennzeichnet, dass** die Koppeleinrichtung (32) mit einem Gelenk versehen ist, welches eine durch Nickbewegungen hervorgerufene Relativverlagerung von Rollator (10) und Plattform (11) ermöglicht und eine Drehachse (44) zwischen Rollator (10) und Plattform (11) definiert, um welche das Gespann aus Rollator (10) und Plattform (11) bei einer Kurvenfahrt knickt.

5. Rollator (10) nach Anspruch 4, **dadurch gekennzeichnet, dass** die Koppeleinrichtung (32) mit einer Horizontalachse versehen ist, mittels derer die Plattform (11) von einer der Nutzung dienenden Funktionsstellung in eine Lagerstellung bewegbar ist.

6. Rollator (10) nach Anspruch 1, **dadurch gekennzeichnet, dass** die Plattform (11) in ihrer Funktionsstellung unterhalb der Koppeleinrichtung (32) angeordnet ist und mittels einer Vertikalstrebe (33) in der Koppeleinrichtung (32) gehalten ist.

7. Rollator (10) nach Anspruch 6, **dadurch gekennzeichnet, dass** die Koppeleinrichtung (32) eine Schubaufnahme (40) aufweist, die die Vertikalstrebe (33) aufnimmt und innerhalb derer die Vertikalstrebe (33) verschieblich gehalten ist.

8. Rollator (10) nach Anspruch 5, **dadurch gekennzeichnet, dass** die Koppeleinrichtung (32) eine Hubhilfe aufweist, mittels derer eine Bewegung der Plattform (11) von ihrer Funktionsstellung in ihre Lagerstellung unterstützt wird, wobei insbesondere eine mechanische Hubhilfe, wie beispielsweise eine Hubfeder vorgesehen ist.

9. Rollator (10) nach einem der vorhergehenden Ansprüche, **dadurch gekennzeichnet, dass** die Plattform (11) von der Koppeleinrichtung (32) trennbar ist.

## Claims

1. Rollator (10),
- with a wheel pair at the front in the direction of travel and a wheel pair at the rear in the direction of travel,
- with a frame (12) having rearwardly directed struts, wherein each strut holds a rear wheel of the rear wheel pair,
- with an electromotive drive, by means of which the rollator (10) is movable forwards at least in the direction of travel,
- with a scissor mechanism for folding the rollator, which has two intersecting scissor levers (55) with a scissor axis (61) connecting the scissor levers (55), and by means of which the rollator (10) can be folded along an axis parallel to the direction of movement of the rollator (10),
**characterised in that**
- a platform (11) is fastened to the rollator (10) and has at least one wheel and provides a standing surface (47) for a person using the rollator (10),
- a coupling means (32) is provided, by means of which the platform (11) is arranged on the rollator (10) so as to bear tensile and thrust loads,
- the coupling means (32) is arranged in the intersection region (54) of the scissor levers (55) associated with the rollator (10),
- the coupling means comprises a fixing hook (53) which surrounds the intersection region of the scissor levers (55) and whose support struts (62) rest on the scissor levers (55).

2. Rollator according to claim 1, **characterised in that** the coupling means is fixed to the scissor axis connecting the scissor levers (55).

3. Rollator according to claim 2, **characterised in that** the scissor axis is formed by a screw bolt.

4. Rollator (10) according to claim 1, **characterised in that** the coupling means (32) is provided with a joint which enables a relative displacement of the rollator (10) and the platform (11) brought about by nodding movements and defines an axis of rotation (44) between the rollator (10) and the platform (11) around which the combination of the rollator (10) and the platform (11) bends on cornering.

5. Rollator (10) according to claim 4, **characterised in that** the coupling means (32) is provided with a horizontal axis by means of which the platform (11) is movable from a functional position serving for use into a stored position.

6. Rollator (10) according to claim 1, **characterised in that**, in its functional position, the platform (11) is arranged below the coupling means (32) and is held in the coupling means (32) by means of a vertical strut (33).

7. Rollator (10) according to claim 6, **characterised in that** the coupling means (32) comprises a thrust absorbing member (40) which accommodates the vertical strut (33) and within which the vertical strut (33) is displaceably held.

8. Rollator (10) according to claim 5, **characterised in that** the coupling means (32) has a lifting aid, by means of which the platform (11) is assisted in its movement from its functional position into its stored position, wherein in particular a mechanical lifting aid, such as for example a lifting spring, is provided.

9. Rollator (10) according to any one of the preceding claims, **characterised in that** the platform (11) is separable from the coupling means (32).

## Revendications

1. Déambulateur (10)
- avec une paire de roues située à l'avant dans le sens du déplacement et une paire de roues située à l'arrière dans le sens du déplacement,
- avec un châssis (12) qui présente des montants orientés vers l'arrière, chaque montant maintenant une roue arrière de la paire de roues arrière,
- avec un mécanisme d'entraînement à moteur électrique au moyen duquel le déambulateur (10) peut se déplacer au moins vers l'avant dans le sens du déplacement,
- avec un mécanisme de ciseaux pour plier le déambulateur, qui présente deux bras de ciseaux (55) se croisant, avec un axe de ciseaux (61) reliant les bras de ciseaux (55), et au moyen duquel le déambulateur (10) peut être plié le long d'un axe s'étendant parallèlement au sens du déplacement du déambulateur (10),
**caractérisé en ce que**
- sur le déambulateur (10) est fixée une plateforme (11) qui présente au moins une roue et offre une surface d'appui (47) pour une personne utilisant le déambulateur (10),
- il est prévu un dispositif de couplage (32) au moyen duquel la plateforme (11) est agencée sur le déambulateur (10) de sorte à retenir la charge en traction et en poussée,
- le dispositif de couplage (32) est agencé dans la zone de croisement (54) des bras de ciseaux (55) associés au déambulateur (10) et
- le dispositif de couplage comprend une barrette de fixation (53) qui embrasse la zone de croisement des bras de ciseaux (55) et dont les barres d'appui (62) reposent sur les bras de ciseaux (55).

2. Déambulateur selon la revendication 1, **caractérisé en ce que** le dispositif de couplage est fixé sur l'axe de ciseaux reliant les bras de ciseaux (55).

3. Déambulateur selon la revendication 2, **caractérisé en ce que** l'axe de ciseaux est formé par un boulon fileté.

4. Déambulateur (10) selon la revendication 1, **caractérisé en ce que** le dispositif de couplage (32) est pourvu d'une articulation qui permet de provoquer par des mouvements d'oscillation un déplacement relatif du déambulateur (10) et de la plateforme (11) et définit entre le déambulateur (10) et la plateforme (11) un axe de rotation (44) autour duquel l'attelage constitué du déambulateur (10) et de la plateforme (11) se plie dans les virages.

5. Déambulateur (10) selon la revendication 4, **caractérisé en ce que** le dispositif de couplage (32) est doté d'un axe horizontal au moyen quel la plateforme (11) peut passer d'une position de fonctionnement servant à l'utilisation à une position de rangement.

6. Déambulateur (10) selon la revendication 1, **caractérisé en ce que**, dans sa position de fonctionnement, la plateforme (11) est disposée au-dessous du dispositif de couplage (32) et est maintenue au moyen d'une jambe verticale (33) dans le dispositif de couplage (32).

7. Déambulateur (10) selon la revendication 6, **caractérisé en ce que** le dispositif de couplage (32) est doté d'un réceptacle de poussée (40) qui reçoit la jambe verticale (33) et à l'intérieur duquel la jambe verticale (33) est maintenue de façon coulissante.

8. Déambulateur (10) selon la revendication 5, **caractérisé en ce que** le dispositif de couplage (32) présente un système d'assistance au levage au moyen duquel un déplacement de la plateforme (11) de sa position de fonctionnement à sa position de rangement est assisté, un système d'assistance au levage mécanique comme par exemple un ressort de levage étant plus particulièrement prévu.

9. Déambulateur (10) selon une des revendications précédentes, **caractérisé en ce que** la plateforme (11) peut être séparée du dispositif de couplage (32).
